# EUROPÄISCHE PATENTSCHRIFT

(11) **EP 1 841 621 B1**
(45) Veröffentlichungstag und Bekanntmachung des Hinweises auf die Patenterteilung: **12.10.2011**
(21) Anmeldenummer: 05819939.9
(22) Anmeldetag: 21.12.2005
(51) Int. Cl.: B60R 11/02

(54) **ANORDNUNG ZUR HANDHABUNG EINES KOMMUNIKATIONSGERÄTES**
DEVICE FOR HANDLING A COMMUNICATION DEVICE
SYSTEME DESTINE AU MANIEMENT D'UN APPAREIL DE COMMUNICATION

(30) Priorität: 25.01.2005 DE 102005003565
(43) Veröffentlichungstag der Anmeldung: 10.10.2007
(73) Patentinhaber: Peiker, Andreas, 61381 Friedrichsdorf (DE)
(72) Erfinder: Peiker, Andreas, 61381 Friedrichsdorf (DE)
(74) Vertreter: Otten, Herbert
(86) Internationale Anmeldenummer: PCT/DE2005/002300
(87) Internationale Veröffentlichungsnummer: WO 2006/079304

(56) Entgegenhaltungen:
- EP-A2- 1 160 916
- WO-A2-02/057117
- DE-A1- 10 202 061
- JP-A- 2001 239 894
- JP-A- 2002 187 489
- JP-A- 2003 312 391
- JP-A- 2004 221 890

## Beschreibung

Die Erfindung betrifft eine Anordnung zur Handhabung eines Kommunikationsgerätes gemäß dem Oberbegriff des Anspruchs 1.

Aus der WO 2002/057117 A2 ist eine Anordnung zur Handhabung eines Kommunikationsgerätes bekannt, bei welcher eine drahtgebundene Anbindung zu außerhalb der Geräthalterung angeordneten Bauteilen, wie Lautsprecher und Mikrofon besteht.

Der Erfindung liegt die Aufgabe zugrunde, eine Anordnung zur Handhabung eines Kommunikationsgerätes zu entwickeln, welche die Anbindung an eine in der Gerätehalterung realisierte Komforteinrichtungen vereinfacht.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Anordnung zur Handhabung eines Kommunikationsgerätes sieht vor, in die Befestigungseinrichtung für die Gerätehalterung ein BT-Modul zu integrieren, welches mit einem mit einer fahrzeugseitigen Steuer- und Bedieneinheit verbundenen zweiten BT-Modul kommuniziert. Hierdurch kann auf eine körperliche Schnittstelle zwischen der Befestigungseinrichtung und den fahrzeugseitigen Komponenten verzichtet werden, so dass Kompatibilitätsprobleme, welche durch nach unterschiedlichen Standards gestaltete Stecker entstehen können, vermieden sind, da eine derartige drahtlose Schnittstelle durch eine entsprechende Software ohne großen Aufwand aufwärts- und abwärtskompatibel ist. Kern der Erfindung ist somit die Nutzung von BT-Modulen zur Vermeidung von Kompatibilitätsproblemen und die Anordnung des ersten BT-Moduls in der Befestigungseinrichtung. Hierdurch kann vorhandener, bislang ungenutzter Bauraum ausgenutzt werden, um bestehende Baugruppen unverändert übernehmen zu können.

Im gesamten Anmeldungstext wird die Abkürzung "BT-Modul" für ein entsprechend dem Funkstandard bluetooth arbeitendes Modul verwendet.

Die Erfindung sieht weiterhin vor, das BT-Modul aus einem BT-Chip, elektronischen Bauteilen und einer Antenne aufzubauen, wobei sämtliche Bauteile auf einer Platine angeordnet sind. Hierdurch entsteht eine kompakte Baugruppe, welche einen einfachen Einbau erlaubt.

Erfindungsgemäß ist es auch vorgesehen, die Platine an die Gerätehalterung über einen Stecker anzubinden. Somit können bereits vorhandene Baugruppen Verwendung finden.

Schließlich sieht die Erfindung vor, das BT-Modul über eine fahrzeugseitige Stromquelle zu versorgen und über eine fahrzeugseitig herangeführte Steuerleitung anzusprechen. Eine derartige Einbindung erlaubt die fahrzeugseitige Kontrolle über das BT-Modul und dient somit der Sicherheit im Fahrzeug.

Weitere Einzelheiten der Erfindung werden in der Zeichnung anhand eines schematisch dargestellten Ausführungsbeispiels beschrieben.

Hierbei zeigt:

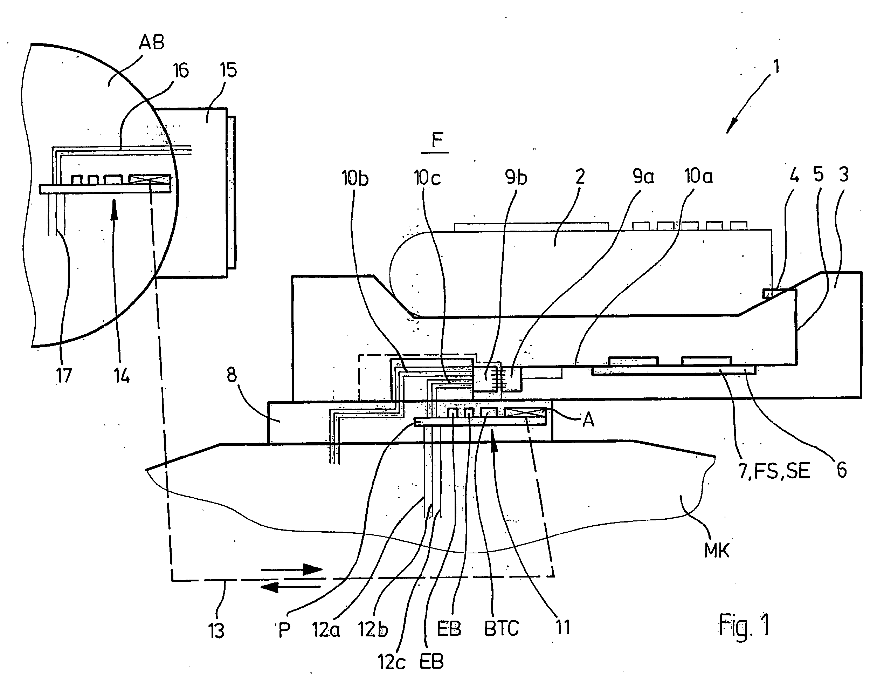

Figur 1: eine erfindungsgemäße Anordnung.

In Figur 1 ist eine Anordnung 1 zur Handhabung eines Kommunikationsgeräts bzw. Mobiltelefons 2 in einem Fahrzeug F dargestellt. Das Mobiltelefon 2 ist in einer Gerätehalterung 3 gehalten und wird von dieser mittels eines ersten Steckers 4 kontaktiert. Über den Stecker 4 an das Mobiltelefon 2 herangeführte Leitungen 5 führen zu einer elektronischen Schaltung 6, welche in der Gerätehalterung 3 angeordnet ist. Die elektronische Schaltung 6 ist als Komforteinrichtung 7 ausgeführt und umfasst die Funktionen einer Freisprecheinrichtung FS und/oder einer Spracherkennung SE. Die Gerätehalterung 3 ist auf eine Befestigungseinrichtung 8 lösbar aufgesteckt, wobei Stecker 9a und 9b zusammenwirken, um Leitungen 10a der Gerätehalterung 3 in der Befestigungseinrichtung 8 weiterzuführen. In der Befestigungseinrichtung 8, welche auf einer Mittelkonsole MK. des Fahrzeugs F befestigt ist, verläuft ein erster Kabelstrang 10b und ein zweiter Kabelstrang 10c. Über den Kabelstrang 10b wird die Gerätehalterung 3 vom Fahrzeug F aus mit Strom versorgt. Über den Kabelstrang 10c steht die elektronische Schaltung 6 der Gerätehalterung 3 mit einem ersten BT-Modul 11 in Kommunikationsverbindung, wobei der Kabelstrang 10c in Form eines flexiblen Leiters ausgeführt ist. Das BT-Modul 11 umfasst eine Platine P, darauf angeordnete elektronische Bauteile EB, einen BT-Chip BTC und eine Antenne A. Das BT-Modul 11 wird analog zur Gerätehalterung 3 vom Fahrzeug aus über Leitungen 12a, 12b mit Strom versorgt. Über ein über eine weitere Leitung 12c gesendetes Signal ist es möglich, das BT-Modul 11 zu aktivieren. Im aktiven Zustand steht das BT-Modul 11 in einer drahtlosen Kommunikationsverbindung 13 mit einem zweiten BT-Modul 14, welches einer in dem Fahrzeug F an einem Armaturenbrett AB angeordneten Steuer- und Bedieneinheit 15, auch als Headunit bezeichnet, zugeordnet ist. Die Steuer- und Bedieneinheit 15 fasst die Steuerung und Bedienung von im Fahrzeug F vorhandenen Peripheriegeräten wie Stereoanlage, Navigationssystem, Freisprecheinrichtung FS usw. zentral zusammen, um die Bedienung der vielen Einzelgeräte zu erleichtern und deren Zusammenwirken zu koordinieren. Das Zweite BT-Modul 14 weist als Kommunikationsverbindung zu der Steuer- und Bedieneinheit 15 einen Kabelstrang 16 auf. Über einen weiteren Kabelstrang 17 wird die Steuer- und Bedieneinheit 15 vom Fahrzeug mit Strom versorgt. Über diesen Kabelstrang 17 ist ebenfalls die Übermittlung eines Aktivierungssignals möglich. Das Zusammenwirken der in der Gerätehalterung 3 angeordneten Freisprecheinrichtung FS und/oder Spracherkennungseinrichtung SE ist drahtlos über die beiden BT-Module 11 und 14 realisiert.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, statt einer drahtlosen Verbindung nach dem bluetooth-Standard auch andere drahtlose Kommunikationsverfahren zu nutzen.

### Bezugszeichenliste:

- 1: Anordnung
- 2: Mobiltelefon
- 3: Gerätehalterung, Halteschale
- 4: Stecker
- 5: an das Mobiltelefon 2 herangeführte Leitungen
- 6: elektronischen Schaltung
- 7: Komforteinrichtung
- 8: Befestigungseinrichtung
- 9a: Stecker an 3
- 9b: Stecker an 8
- 10a: Leitungen von 6 zu 9a
- 10b: erster Kabelstrang in 8
- 10c: zweiter Kabelstrang in 8
- 11: BT-Modul
- 12a, 12b: Leitungen zu 11
- 12c: Leitung zu 11
- 13: Kommunikationsverbindung
- 14: zweites BT-Modul
- 15: Steuer- und Bedieneinheit bzw. Headunit
- 16: Kabelstrang
- 17: Kabelstrang
- A: Antenne
- AB: Armaturenbrett
- BTC: BT-Chip
- EB: elektronisches Bauteil
- F: Fahrzeug
- FS: Freisprecheinrichtung
- MK: Mittelkonsole
- P: Platine
- SE: Spracherkennung

## Patentansprüche

1. Anordnung (1) zur Handhabung eines Kommunikationsgerätes, wie Mobiltelefon (2), Personal Digital Assistent oder dergleichen, insbesondere zur Verwendung in einem Fahrzeug (F), bestehend aus einer das Kommunikationsgerät (2) aufnehmenden Gerätehalterung (3) und einer an die Gerätehalterung (3) mechanisch angepassten Befestigungseinrichtung (8), wobei die Gerätehalterung (3) eine geometrische bzw. mechanische Anpassung an das Kommunikationsgerät (2) aufweist und mit diesem in Kommunikationsverbindung steht, wobei eine elektronische Schaltung (6) innerhalb der Gerätehalterung (3) vorgesehen ist, welche wenigstens alle für einen Betrieb bzw. eine Steuerung einer Komforteinrichtung (7) erforderlichen elektronischen Komponenten umfasst, wobei eine universelle, mechanische Standardisierung bzw. Anpassung zur Verbindung der Gerätehalterung (3) mit der Befestigungseinrichtung (8) vorgesehen ist, wobei zusätzlich zur mechanischen eine universelle elektrische Standardisierung bzw. Anpassung der Gerätehalterung (3) an die Befestigungseinrichtung (8) erfolgt, wobei der Befestigungseinrichtung (8) lediglich elektrische bzw. elektronische Komponenten zur Ein- und/oder Ausgabe von Sprache und/oder Daten nachgeschaltet sind, **dadurch gekennzeichnet, dass** in die Befestigungseinrichtung (8) ein erstes BT-Modul (11) integriert ist, welches mit einem zweiten BT-Modul-(14) kommuniziert, wobei das zweite BT-Modul (14) mit einer fahrzeugseitigen Steuer- und Bedieneinheit (15) in Verbindung steht, wobei das Zusammenwirken mit einer in der Gerätehalterung (3) angeordneten Freisprecheinrichtung (FS) und/oder einer Spracherkennungseinrichtung (SE) drahtlos über die beiden BT-Module (11, 14) erfolgt.

2. Anordnung zur Handhabung eines Kommunikationsgerätes nach Anspruch 1, **dadurch gekennzeichnet, dass** das BT-Modul (11, 14) einen BT-Chip (BTC), elektronische Bauteile (EB) und eine Antenne (A) umfasst, welche auf einer Platine (P) angeordnet sind.

3. Anordnung zur Handhabung eines Kommunikationsgerätes nach einem der vorhergehenden Ansprüche, **dadurch gekennzeichnet, dass** die Platine (P) mit der Gerätehalterung (3) über einen Stecker (9b) verbindbar ist.

4. Anordnung zur Handhabung eines Kommunikationsgerätes nach einem der vorhergehenden Ansprüche, **dadurch gekennzeichnet, dass** das BT-Modul (11, 14) eine fahrzeugseitige Stromquelle (12a, 12b) und eine fahrzeugseitig herangeführte Steuerleitung (12c) aufweist.

## Claims

1. Device (1) for handling a communication device, such as a mobile phone (2), personal digital assistant or the like, in particular for use in a vehicle (F), comprising a device holder (3) which holds the communication device (2) and an attachment device (8) which is mechanically adjusted to the device holder (3), wherein the device holder (3) is adjusted geometrically and mechanically to the communication device (2) and is connected to it for communication purposes, wherein an electronic circuit (6) is provided within the device holder (3), which comprises at least all of the electronic components required for the operation and/or control of a convenience device (7), wherein a universal, mechanical standardisation and adjustment is provided for the connection of the device holder (3) to the attachment device (8), wherein in addition to the mechanical standardisation and adjustment universal electrical standardisation and adjustment of the device holder (3) to the attachment device (8) is provided, wherein only electrical and/or electronic components for the input and/or output of speech and/or data are connected downstream of the attachment device (8), **characterised in that** a first BT module (11) is integrated into the attachment device (8), which first BT module communicates with a second BT module (14), wherein the second BT module (14) is connected to a vehicle-side control and operating unit (15), wherein the two BT modules (11, 14) interact wirelessly with a hands-free device (FS) and/or speech recognition device (SE) which are arranged in the device holder (3).

2. Device for handling a communication device according to claim 1, **characterised in that** the BT module (11, 14) comprises a BT chip (BTC), electronic components (EB) and an aerial (A) which are arranged on a board (P).

3. Device for handling a communication device according to one of the preceding claims, **characterised in that** the board (P) can be connected to the device holder (3) via a plug (9b).

4. Device for handling a communication device according to any one of the preceding claims, **characterised in that** the BT module (11, 14) comprises a vehicle-side electrical power source (12a, 12b) and a vehicle-side introduced control line (12c).

## Revendications

1. Dispositif (1) de maniement d'un appareil de communication tel qu'un téléphonique mobile (2), un assistant numérique personnel (PDA) ou appareil analogue notamment pour être utilisé dans un véhicule (F), dispositif composé d'un support d'appareil (3) recevant l'appareil de communication (2) et d'une installation de fixation (8) adaptée mécaniquement au support d'appareil (3),
* le support d'appareil (3) ayant une adaptation géométrique ou mécanique à l'appareil de communication (2) et étant en liaison de communication avec celui-ci,
* le support d'appareil (3) comportant un circuit électronique (6) ayant au moins tous les composants électroniques nécessaires au fonctionnement ou à la commande d'une installation de confort (7),
* une standardisation ou adaptation mécanique universelle étant prévue pour relier le support d'appareil (3) à l'installation de fixation (8),
* en plus de la standardisation ou adaptation mécanique du support d'appareil (3), il y a une standardisation ou adaptation électrique universelle à l'installation de fixation (8),
* l'installation de fixation (8) comporte, en aval, uniquement des composants électroniques ou électriques pour recevoir et/ou émettre la voix et/ou des données,
dispositif **caractérisé en ce que**
- un premier module BT (11) est intégré dans l'installation de fixation (8) qui communique avec un second module BT (14),
- le second module BT (14) étant relié à une unité de commande et de service (15) côté véhicule,
- la coopération se fait avec une installation main-libre (FS) prévue dans le support de l'appareil (3) et/ou une installation de reconnaissance vocale (SE) sans fil par les deux modules BT (11, 14),

2. Dispositif de maniement d'un appareil de communication selon la revendication 1,
**caractérisé en ce que**
le module BT (11, 14) comporte une puce BT (BTC), des composants électroniques (EB) et une antenne (A) sur une platine (P).

3. Dispositif de maniement d'un appareil de communication selon l'une des revendications précédentes,
**caractérisé en ce que**
la platine (P) peut être reliée par un connecteur (9b) au support d'appareil (3).

4. Dispositif de maniement d'un appareil de communication selon l'une des revendications précédentes,
**caractérisé en ce que**
le module BT (11, 14) comporte une source de courant (12a, 12b) côté véhicule et une ligne de commande (12c) arrivant côté véhicule.
